# EUROPEAN PATENT APPLICATION

(11) **EP 4 734 220 A1**
(43) Date of publication of application: **29.04.2026**
(21) Application number: 25193318.0
(22) Date of filing: 01.08.2025
(51) Int. Cl.: H01M 10/42, H01M 50/204, H01M 50/298, H01M 50/502, B60L 50/64, H01M 50/209

(54) **BATTERY PACK AND VEHICLE**

(30) Priority: 28.10.2024 CN 202422611669 U; 20.01.2025 WO PCT/CN2025/073266
(71) Applicant: Eve Energy Co., Ltd., Huizhou, Guangdong 516006 (CN)
(72) Inventor: HUANG, Liliang, Huizhou, Guangdong, 516006 (CN); CHEN, Zhiwei, Huizhou, Guangdong, 516006 (CN); CHEN, Chaohai, Huizhou, Guangdong, 516006 (CN)
(74) Representative: Berggren Oy

(57) **Abstract**

The present disclosure relates a battery pack and a vehicle, and relates to the technical field of batteries. The battery pack includes a box (110), a cell module (120), a high-voltage distribution box (160), a battery management system (150), a cells contact system (130), and a total positive and total negative module (140). The cell module (120) is installed in the box (110). The cells contact system (130) includes a high-voltage passage (131) and a low-voltage passage (132), and each cell module (120) is electrically connected to the high-voltage passage (131) and the low-voltage passage (132). The high-voltage passage (131) is electrically connected to the high-voltage distribution box (160) through the total positive and total negative module (140), and the low-voltage passage (132) is electrically connected to the high-voltage distribution box (160) through the battery management system (150).

## Description

### TECHNICAL FIELD

The present disclosure belongs to the technical field of batteries, and in particular, relates to a battery pack and a vehicle.

### BACKGROUND

In the related arts, the form of a cell-module-PACK is generally used of a battery pack for a vehicle. The overall arrangement of the vehicle battery pack in this form is relatively complex, the wiring harness is long, space and a fixed point are required for the wiring, and a large number of copper busbars are needed.

### SUMMARY

A separate wiring harness is required for the cell module to be connected to a battery management system, which means that more wiring harnesses need to be provided in the battery pack. As a result, the structure of the whole battery pack is complex, the volume utilization is low, and the cost is high.

The present disclosure provides a battery pack and a vehicle, which can reduce the number of wiring harnesses and transfer copper busbars in the battery pack, reduce the number of parts, reduce the complexity of the structure, and save space and cost.

In a first aspect, some implementations of the present disclosure provide a battery pack. The battery pack includes a box, at least one cell module, a high-voltage distribution box, a battery management system, a cells contact system, and a total positive and total negative module. The cell module is installed in the box. The cells contact system includes a high-voltage passage and a low-voltage passage, and each cell module is electrically connected to the high-voltage passage and the low-voltage passage.

The high-voltage passage is electrically connected to the high-voltage distribution box through the total positive and total negative module, and the low-voltage passage is electrically connected to the high-voltage distribution box through the battery management system.

In a second aspect, some implementations of the present disclosure provide a vehicle including the battery pack according to the first aspect and any possible designs thereof.

### BENEFICIAL EFFECTS

According to the present disclosure, a cells contact system is provided, and each cell module is connected to the cells contact system. Further, the cells are connected to the high-voltage distribution box and the battery system through the cells contact system. Since the low-voltage passage on the cells contact system is electrically connected to all the cell modules, once the low-voltage passage is connected to the battery management system, all the cell modules can be electrically connected to the battery management system, thereby avoiding the situation that a separate wiring harness is needed for each cell module to be connected to the battery management system. In this way, the use of wiring harnesses is reduced, and space and cost are saved. Since the high-voltage passage on the cells contact system is electrically connected to all the cell modules, and one high-voltage passage can be connected to the high-voltage distribution box through only one total positive and total negative module, thereby avoiding the situation that a conductive block is needed for each cell module to be connected to the high-voltage distribution box, thereby reducing the number of conductive blocks, the number of parts, and the cost.

### BRIEF DESCRIPTION OF THE DRAWINGS

To describe the technical solutions in the embodiments of the present disclosure more clearly, the following briefly describes the accompanying drawings required for describing the embodiments.
FIG. 1 is a schematic structural diagram of the overall structure of a battery pack according to some embodiments of the present disclosure;
FIG. 2 is one schematic structural diagram of a partial structure of a battery pack according to some embodiments of the present disclosure;
FIG. 3 is another schematic structural diagram of a partial structure of a battery pack according to some embodiments of the present disclosure; and
FIG. 4 is a schematic cross-sectional structural view of a battery pack according to some embodiments of the present disclosure.

List of reference signs: 110-box; 120-cell module; 130-cells contact system; 140-total positive and total negative module; 150-battery management system; 160-high-voltage distribution box; 170-transfer busbar; A 180-plug-connection member;
111-placement space; 121-cell; 101-first aluminum busbar;
131-high-voltage passage; 132-low-voltage passage; 133-connection block assembly; 134-second aluminum busbar;
141-total positive terminal; 142-total negative terminal; 171-first transfer busbar; 172-second transfer busbar;
181-connection plug.

### DETAILED DESCRIPTION

The technical solutions in the present disclosure will be described with reference to the accompanying drawings.

In the related arts, a vehicle battery pack generally adopts the form of a cell-module-PACK. The overall arrangement of the vehicle battery pack in this form is relatively complex, the wiring harness is long, space and a fixed point are required for the wiring, and a separate wiring harness is required for the cell module to be connected to a battery management system, which means that more wiring harnesses need to be provided in the battery pack. In addition, in the related arts, after cells are formed into a plurality of modules, a separate conductive block is needed for each module to be connected to a battery disconnect unit (BDU). As a result, more conductive blocks are required, and corresponding fasteners are needed for fixing the conductive blocks. Moreover, the conductive blocks generally need to be connected to the high-voltage box through transfer copper busbars, as a result, there are a larger number of transfer copper busbars in the battery pack, which occupy a larger amount of space and increase the cost of the whole battery pack. In addition, it is also necessary to connect the high-voltage box and the external plug-in through the transfer copper busbars. The transfer copper busbars not only occupy space, but also are inconvenient to assemble and have high protection requirements. The structure of the whole battery pack is complex, the volume utilization is low, and the cost is high.

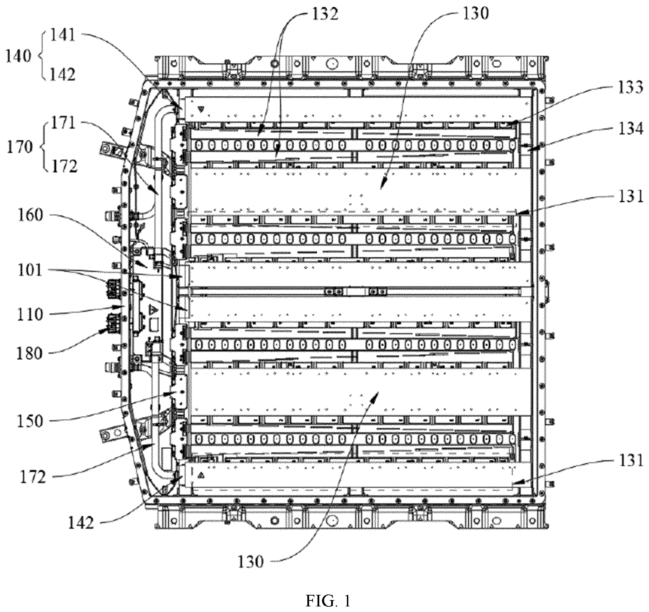

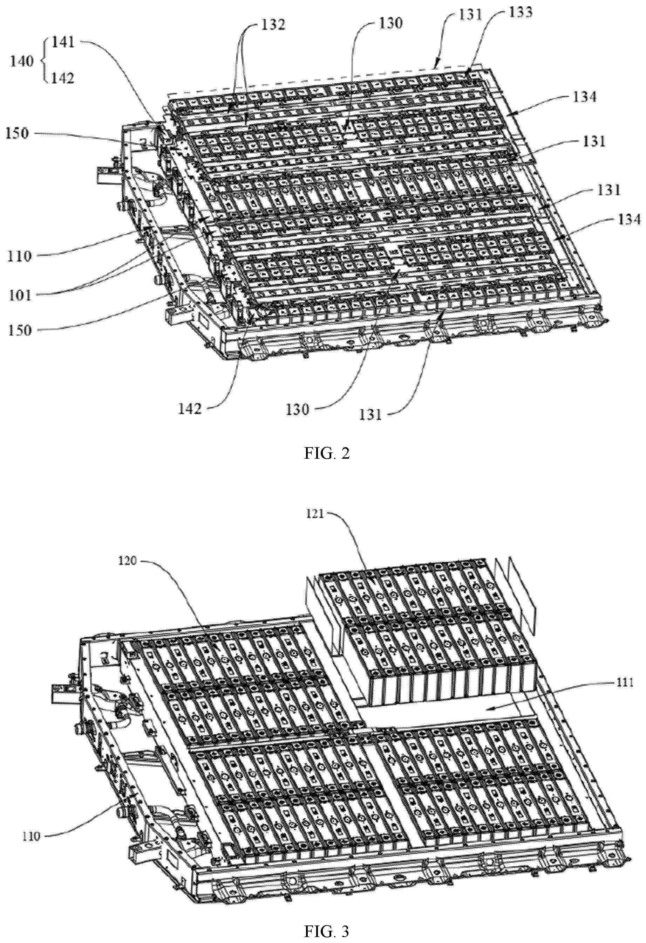

To solve the above technical problems, please refer to FIG. 1, FIG. 2, and FIG. 3, FIG. 1 is a schematic structural diagram of the overall structure of a battery pack according to some embodiments of the present disclosure; FIG. 2 is one schematic structural diagram of a partial structure of a battery pack according to some embodiments of the present disclosure; and FIG. 3 is another schematic structural diagram of a partial structure of a battery pack according to some embodiments of the present disclosure. As shown in FIGs. 1, 2, and 3, some embodiments of the present disclosure provide a battery pack. The battery pack includes a box 110, at least one cell module 120, a high-voltage distribution box 160, a battery management system 150, a cells contact system 130, and a total positive and total negative module 140. The box 110 is provided with a placement space 111 for placing the cell module 120, and the battery module 120 is installed in the placement space 111 of the box 110. The cells contact system 130 includes a high-voltage passage 131 and a low-voltage passage 132, and each battery module 120 is electrically connected to the high-voltage passage 131 and the low-voltage passage 132. The high-voltage passage 131 is electrically connected to the high-voltage distribution box 160 through the total positive and total negative module 140, and the low-voltage passage 132 is electrically connected to the high-voltage distribution box 160 through the battery management system 150.

In some embodiments of the present disclosure, a cells contact system 130 is provided, and each cell module 120 is connected to the cells contact system 130. Further, the cells 121 are connected to the high-voltage distribution box 160 and the battery system through the cells contact system 130. Since the low-voltage passage 132 on the cells contact system 130 is electrically connected to all the cell modules 120, once the low-voltage passage 132 is connected to the battery management system 150, all the cell modules 120 can be electrically connected to the battery management system 150, thereby avoiding the situation that a separate wiring harness is needed for each cell module 120 to be connected to the battery management system 150. In this way, the use of wiring harnesses is reduced, and space and cost are saved. Since the high-voltage passage 131 on the cells contact system 130 is electrically connected to all the cell modules 120, and one high-voltage passage 131 can be connected to the high-voltage distribution box 160 through only one total positive and total negative module 140, thereby avoiding the situation that a conductive block is needed for each cell module 120 to be connected to the high-voltage distribution box 160, thereby reducing the number of conductive blocks, the number of parts, and the cost.

As shown in FIG. 1, in some embodiments of the present disclosure, the battery pack further includes a transfer busbar 170. The total positive and total negative module 140 is electrically connected to the high-voltage distribution box 160 through the transfer busbar 170. It should be noted that the transfer busbar 170 in some embodiments of the present disclosure may be a transfer copper busbar.

In some embodiments of the present disclosure, only one high-voltage passage 131 can be disposed on the cells contact system 130. In this case, the cells contact system 130 can be connected to the high-voltage distribution box 160 through only one total positive and total negative module 140. Further, the total positive and total negative module 140 and the high-voltage distribution box 160 need to be transferred through the transfer busbar 170. As a result, only one transfer busbar 170 is needed to achieve transfer between the total positive and total negative module 140 and the high-voltage distribution box 160. That is, in some embodiments of the present disclosure, the connection between the cells contact system 130 and the high-voltage distribution box 160 can be achieved by using only one transfer busbar 170. Compared with the prior arts in which a plurality of conductive blocks and transfer copper busbars are required, the number of the transfer busbars 170 in the present disclosure is greatly reduced, which not only reduces space occupation, but also reduces use of parts and overall cost of the battery pack.

As shown in FIG. 1, in some embodiments of the present disclosure, the total positive and total negative module 140 includes a total positive terminal 141 and a total negative terminal 142. The total positive terminal 141 and the total negative terminal 142 are disposed on both sides of the box 110, respectively. The transfer busbar 170 includes a first transfer busbar 171 and a second transfer busbar 172. Here, the total positive terminal 141 is connected to the positive electrode terminal of the high-voltage distribution box 160 through the first transfer busbar 171, and the total negative terminal 142 is connected to the negative electrode terminal of the high-voltage distribution box 160 through the second transfer busbar 172.

In some embodiments of the present disclosure, a plurality of cell modules 120 may be provided, and the high-voltage passages 131 on the cells contact system 130 need to connect all of the cell modules 120. As a result, when the high-voltage passage 131 is disposed, the high-voltage passage 131 is generally disposed in an "S" shape to connect all the cell modules 120 together and facilitate wiring. According to the wiring manner described above, both ends of the high-pressure passage 131 are generally disposed on both sides of the box 110. Therefore, the two ends of the total positive and total negative module 140 connected to the high-voltage passage 131, namely, the total positive terminal 141 and the total negative terminal 142, are also disposed on both sides of the box 110, respectively. The high-voltage distribution box 160 is generally disposed in the middle of one side of the box 110. In order to connect the total positive terminal 141 and the total negative terminal 142 to the high-voltage distribution box 160, respectively, the transfer busbar 170 is thus provided with a first transfer busbar 171 and a second transfer busbar 172, in this way, the total positive terminal 141 is connected to the positive electrode terminal of the high-voltage distribution box 160 through the first transfer busbar 171, and the total negative terminal 142 is connected to the negative electrode terminal of the high-voltage distribution box 160 through the second transfer busbar 172, thus achieving electrical connection between the total positive and total negative module 140 and the high-voltage distribution box 160.

As shown in FIG. 1, in some embodiments of the present disclosure, the battery pack further includes a plug-connection member 180. The plug-connection member 180 is disposed at a side end of the box 110. The plug-connection member 180 includes a connection plug 181, which is directly connected to the high-voltage distribution box 160.

In the related arts, the external plug-in and the high-voltage distribution box 160 also need to be connected through transfer copper busbars. The transfer copper busbars not only occupy space, but also are inconvenient to assemble and have high protection requirements. As a result, the structure of the whole battery pack is complex, the volume utilization is low, and the cost is high. In some embodiments of the present disclosure, the connection plug 181 in the plug-connection member 180 is directly connected to the high-voltage distribution box 160, thereby eliminating the use of the transfer copper busbars and reducing the cost. At the same time, the assembly is made more convenient.

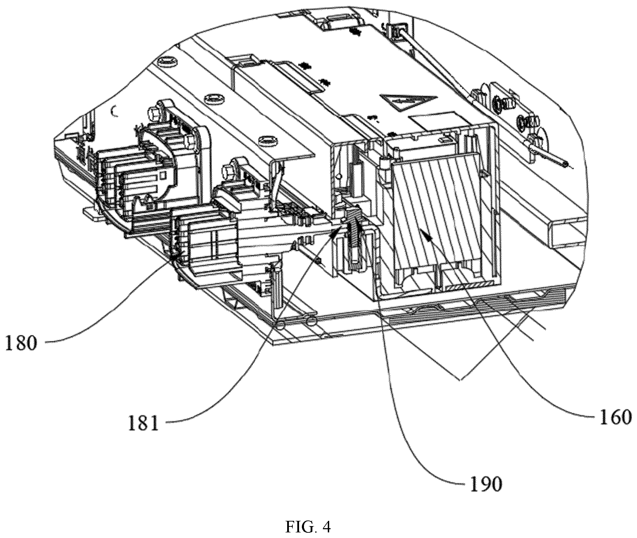

Referring to FIG. 4, FIG. 4 is a schematic cross-sectional structural view of a battery pack according to some implementations of the present disclosure, and FIG. 4 is a partial cross-sectional view of the plug-connection member 180 and the high-voltage distribution box 160. As shown in FIG. 4, in some embodiments of the present disclosure, the connection plug 181 is electrically connected to the high-voltage distribution box 160 through screws. The connection plug 181 is directly connected to the high-voltage distribution box 160, which is convenient and quick. The electrical connection between the connection plug 181 and the high-voltage distribution box 160 is achieved through screws, which is simple in connection and stable in fixation. The screws in some embodiments of the present disclosure may be metal screws.

In some embodiments of the present disclosure, the battery pack includes at least two cell modules, each cell module includes a plurality of cells. For example, two cell modules, three cell modules, four cell modules, eight cell modules, and the like may be disposed in the battery pack.

In some embodiments of the present disclosure, as shown in FIG. 3, the battery pack includes four cell modules 120, each cell module 120 includes a plurality of cells 121. The number and layout of cells 121 within each cell module 120 are the same. Here, as shown in FIG. 3, the box 110 includes four placement spaces 111, and the four placement spaces 111 are of the same size. Two rows of cells 121 are placed in each placement space 111. The cells 121 in the same row in two adjacent placement spaces 111 form a cell module 120. Therefore, the battery pack in some embodiments of the present disclosure includes four cell modules 120. Of course, more cell modules 120 may be disposed according to specific requirements. In some embodiments of the present disclosure, the specific number of the cell modules 120 is not limited. At the same time, the specific arrangement of the cell module 120 is not limited.

In some embodiments of the present disclosure, the battery pack includes at least one cells contact system, and the at least one cells contact system is electrically connected to the cell module. In a case that the battery pack includes at least two cells contact systems, the high-voltage passages of the at least two cells contact systems are connected through the first aluminum busbars. For example, one cells contact system may be disposed, two cells contact systems may be disposed, or more cells contact systems may be disposed. The number of the cells contact systems can be adaptively adjusted according to the number of the cell modules, for example, the number of the cells contact systems can be determined according to the number of the cell modules and the number of the cell modules to which each cells contact system can be connected.

In some embodiments of the present disclosure, as shown in FIG. 1, the battery pack includes two cells contact systems 130, each of which is electrically connected to two cell modules 120, and the high-voltage passages 131 of the two cells contact systems 130 are connected through a first aluminum busbar 101. Since four cell modules 120 are disposed in some embodiments of the present disclosure, if only one cells contact system 130 is disposed, the size of the cells contact system 130 is relatively large. Therefore, two cells contact systems 130 are disposed, and the high-voltage passages 131 of the two cells contact systems 130 are connected in series by the first aluminum busbar 101 to form one high-voltage passages 131.

In some embodiments of the present disclosure, as shown in FIG. 3, a cell module includes two columns of cells, each cell group includes a plurality of cells. That is, when arranging the cell module, the plurality of cells may be arranged in two rows or two columns, so that the aspect ratio and the layout of the core module are more reasonable.

In some embodiments of the present disclosure, the cells contact system 130 includes two connection block assemblies 133 and a second aluminum busbar 134, the connection block assemblies 133 are electrically connected to the cell module 120. Specifically, the connection block assemblies 133 are electrically connected to the cell groups in the cell module 120, and the two connection block assemblies 133 communicate through the second aluminum busbar 134 to form the high-voltage passage 131.

As shown in FIG. 2, each cells contact system 130 needs to be connected to two cell modules 120, two cell modules 120 needs to be electrically connected through the cells contact system 130. In order to facilitate wiring, two connection block assemblies 133 are disposed close to both sides of the cells contact system 130, and each connection block assembly 133 is connected to the cell groups on the same side of the two battery cell modules 120. The second aluminum busbar 134 is disposed to connect two connection block assemblies 133 in series to form the high-voltage passage 131.

In some embodiments of the present disclosure, the cells contact system 130 includes two groups of low-voltage loops, each group of the low-voltage loops is electrically connected to a group of cell modules 120 accordingly. Specifically, the low-voltage loops are electrically connected to the cell groups in the cell modules 120, and the low-voltage loops are electrically connected to the battery management system 150.

Since each cells contact system 130 needs to be connected to two cell modules 120, two groups of low-voltage loops are disposed on the cells contact system 130, each group of the low-voltage loops is electrically connected to the cell groups on the same side of the two groups of cell modules 120 accordingly, and then the low-voltage loops are electrically connected to the battery management system 150, so that all the cell modules 120 can be electrically connected to the battery management system 150.

In some embodiments of the present disclosure, a vehicle is also provided. The vehicle includes the battery pack described in any of the embodiments.

## Claims

1. A battery pack, **characterized in that** the battery pack comprises a box (110), at least one cell module (120), at least one cells contact system (130), a total positive and total negative module (140), a battery management system (150), and a high-voltage distribution box (160); wherein:
the at least one cell module (120) is installed in the box (110);
the at least one cells contact system (130) comprises a high-voltage passage (131) and a low-voltage passage (132), each of at least one cell module (120) is electrically connected to the high-voltage passage (131) and the low-voltage passage (132); and
the high-voltage passage (131) is electrically connected to the high-voltage distribution box (160) through the total positive and total negative module (140), and the low-voltage passage (132) is electrically connected to the high-voltage distribution box (160) through the battery management system (150).

2. The battery pack according to claim 1, **characterized in that** the battery pack further comprises a transfer busbar (170), the total positive and total negative module (140) is electrically connected to the high-voltage distribution box (160) through the transfer busbar (170).

3. The battery pack according to claim 2, **characterized in that** the battery pack further comprises a plug-connection member (180) disposed at a side end of the box (110), the plug-connection member (180) comprises a connection plug (181), and the connection plug (181) is directly connected to the high-voltage distribution box (160).

4. The battery pack according to any one of claims 1 to 3, the battery pack the at least one cell module (120) comprises at least two cell modules (120), each of the at least two cell modules (120) comprises a plurality of cells (121).

5. The battery pack according to claim 4, **characterized in that** in a case that the at least one cells contact system (130) comprises one cells contact system (130), the cells contact system (130) is electrically connected to the at least one cell module (120); in a case that the at least one of the cells contact system (130) comprises at least two cells contact systems (130), the high-voltage passage (131) of each of the at least two cells contact systems (130) is connected through a first aluminum busbar (101).

6. The battery pack according to claim 5, **characterized in that** the at least one cell module (120) comprises two columns of cell groups, each of the cell groups comprises ones of the plurality of the cells (121).

7. The battery pack according to claim 6, **characterized in that** the at least one cells contact system (130) comprises two connection block assemblies (133) and a second aluminum busbar (134), the two connection block assemblies (133) are electrically connected to the cell groups, and the two connection block assemblies (133) are communicated through the second aluminum busbar (134) to form the high-voltage passage (131).

8. The battery pack according to claim 6 or 7, **characterized in that** the at least one cells contact system (130) comprises two groups of low voltage loops, each one of the two groups of low voltage loops is electrically connected to a corresponding one of the cell groups, and the two groups of low voltage loops are electrically connected to the battery management system (150).

9. The battery pack according to claim 2, **characterized in that** the total positive and total negative module (140) comprises a total positive terminal (141) and a total negative terminal (142), the total positive terminal (141) and the total negative terminal (142) are disposed on two sides of the box (110), respectively, and the transfer busbar (170) comprises a first transfer busbar (171) and a second transfer busbar (172);
the total positive terminal (141) is connected to a positive electrode terminal of the high-voltage distribution box (160) through the first transfer busbar (171), and the total negative terminal (142) is connected to a negative electrode terminal of the high-voltage distribution box (160) through the second transfer busbar (172).

10. The battery pack according to claim 3, **characterized in that** the connection plug (181) is electrically connected to the high-voltage distribution box (160) through screws.

11. The battery pack according to claim 2, **characterized in that** the transfer busbar (170) is a transfer copper busbar.

12. The battery pack according to claim 1, **characterized in that** the high-voltage passage (131) is disposed in an "S" shape.

13. The battery pack according to claim 4, **characterized in that** the box (110) is provided with at least one placement space (111), two rows of ones of the plurality of cells (121) are placed in each of the at least one placement space (111).

14. The battery pack according to claim 5, **characterized in that** each of the at least two cells contact systems (130) is electrically connected to two ones of the at least cell module (120).

15. A vehicle comprising the battery pack according to any one of claims 1 to 14.
